# EUROPEAN PATENT SPECIFICATION

(11) **EP 4 493 029 B1**
(45) Date of publication and mention of the grant of the patent: **29.04.2026**
(21) Application number: 23714601.4
(22) Date of filing: 13.03.2023
(51) Int. Cl.: A23P 30/40, A47J 31/44, A23P 30/20

(54) **DEVICE FOR WHIPPING A FOOD LIQUID**
VORRICHTUNG ZUM AUFSCHLAGEN EINER LEBENSMITTELFLÜSSIGKEIT
DISPOSITIF POUR FOUETTER UN LIQUIDE ALIMENTAIRE

(30) Priority: 18.03.2022 IT 202200005351
(43) Date of publication of application: 22.01.2025
(73) Proprietor: Dal Tio, Fabio, 31013 Codogné, Treviso (IT)
(72) Inventor: Dal Tio, Fabio, 31013 Codogné, Treviso (IT)
(74) Representative: Mitola, Marco
(86) International application number: PCT/IB2023/052392
(87) International publication number: WO 2023/175471

(56) References cited:
- US-A1- 2014 322 415
- US-A1- 2018 042 290
- US-A1- 2018 220 837

## Description

### FIELD OF APPLICATION

The present invention relates to a device for whipping a food liquid, such as milk.

### PRIOR ART

There are a variety of device solutions in the art for the whipping of food liquids, particularly milk, typically employed by baristas to make cappuccinos and hot drinks in general.

The known solutions belong to two distinct categories. The first category includes steam cappuccino makers that employ jets of steam to whip milk. These cappuccino makers are based on the principle of incorporating air bubbles within the food liquid and emulsifying its internal fats.

Such devices are not without flaws.

In particular, they are noisy, often result in milk splashes that dirty the barista's work surface, and are also inefficient where the food liquid to be whipped contains little fat. In other words, they cannot whip milk that does not contain sufficient fat/cream. In effect, they are unusable for applications with skim milk.

The second category includes devices that pressurize the food liquid so as to induce aggregation of the proteins contained therein.

In practice, such devices comprise a cylinder housing a piston with a constant circular cross-section, on the outer side surface of which a plurality of labyrinth paths are obtained. The pressurized food liquid, pushed by an upstream pump, is forced to pass into the channel identified between the inner side surface of the cylinder and the outer side surface of the piston, which is provided with the aforementioned labyrinth paths. Due to the considerable pressure to which it is subjected, the proteins contained within the liquid tend to aggregate, resulting in, for example, a whipped milk.

These devices are less noisy than the former, but still have technological limitations in food liquid applications. For example, they are unable to sufficiently whip low-fat or fat-free milk, and they are also difficult to fine-tune according to different operating conditions. In other words, they are effective if they are specifically adjusted for a specific food substance, such as a milk, having a specific fat content (whether goat, cow, or sheep milk, for example), at a specific temperature. Outside of well-defined parameters, these pressure devices are unable to ensure proper whipping of the food liquid.

In other words, by changing the type of food liquid, the delivery pressure, or even just the temperature of the liquid itself, these devices are unable to guarantee the consistency of the result obtained. In fact, it would be necessary to replace the type and/or size of the inner piston for the same outer containing cylinder in order to obtain a properly whipped liquid. It is obvious that the extreme sensitivity of these devices to their respective operating conditions (in particular the type, chemical composition, pressure, and temperature of the food liquid used) makes them unsuitable for professional use. Furthermore, the use of various pistons, depending on the boundary conditions, significantly increases their costs as well as the operation and maintenance times. Moreover, as mentioned, such known devices are also not capable of whipping low-fat or fat-free food, such as a skim milk or a plant-based milk. Solutions according to prior art are disclosed by US 2018/220837 A1, US 2014/322415 A1, US 2018/042290 A1.

### DISCLOSURE OF THE INVENTION

There is therefore a need to resolve the drawbacks and limitations mentioned with reference to the prior art.

This need is satisfied with a device for whipping a food liquid according to claim 1.

### DESCRIPTION OF THE DRAWINGS

Further features and advantages will become more apparent from the following detailed description of preferred, non-limiting embodiments thereof, wherein:

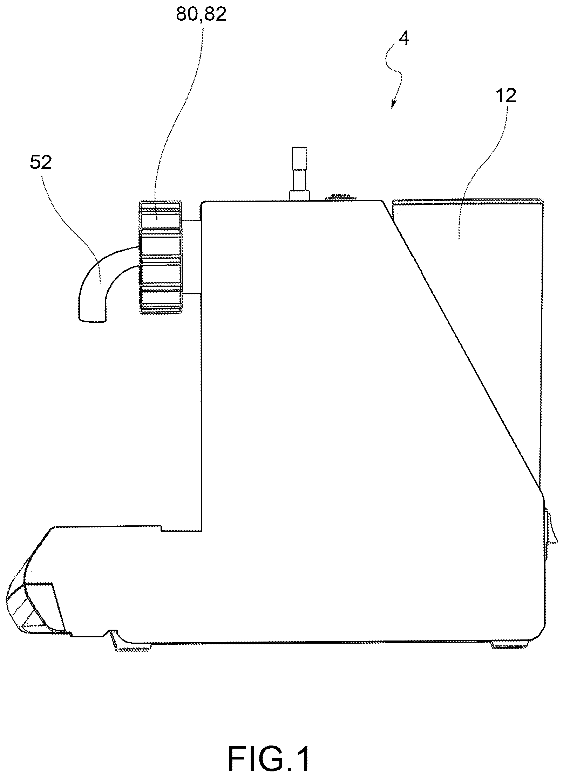

Fig. 1 is a side view of a device for whipping a food liquid according to an embodiment of the present invention;

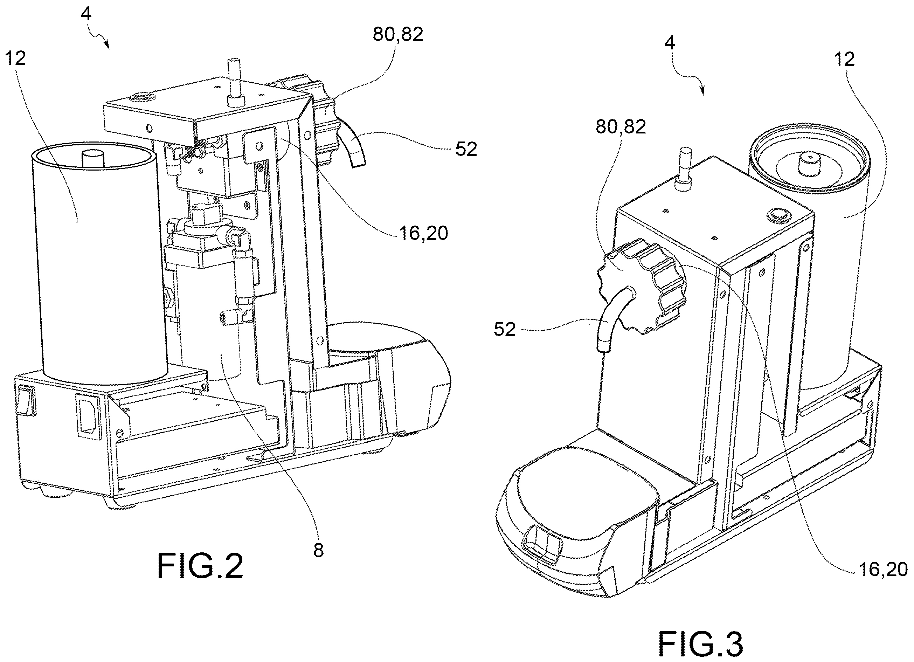

Fig. 2-3 are perspective views, from different angles, of the device in Fig. 1, from which the outer casing has been removed;

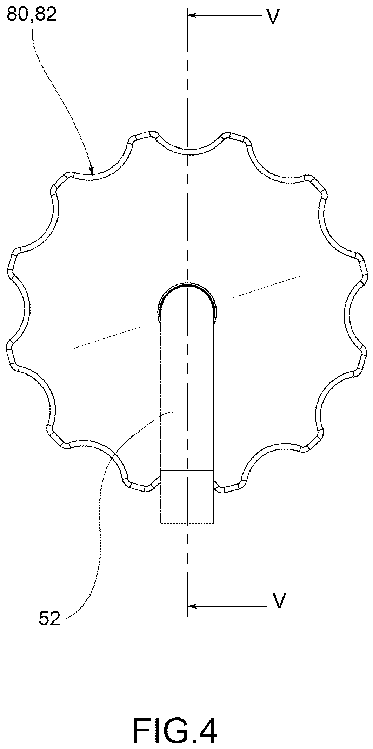

Fig. 4 is a front view of the ferrule-cylinder-extruder assembly of the whipping device in Fig. 1;

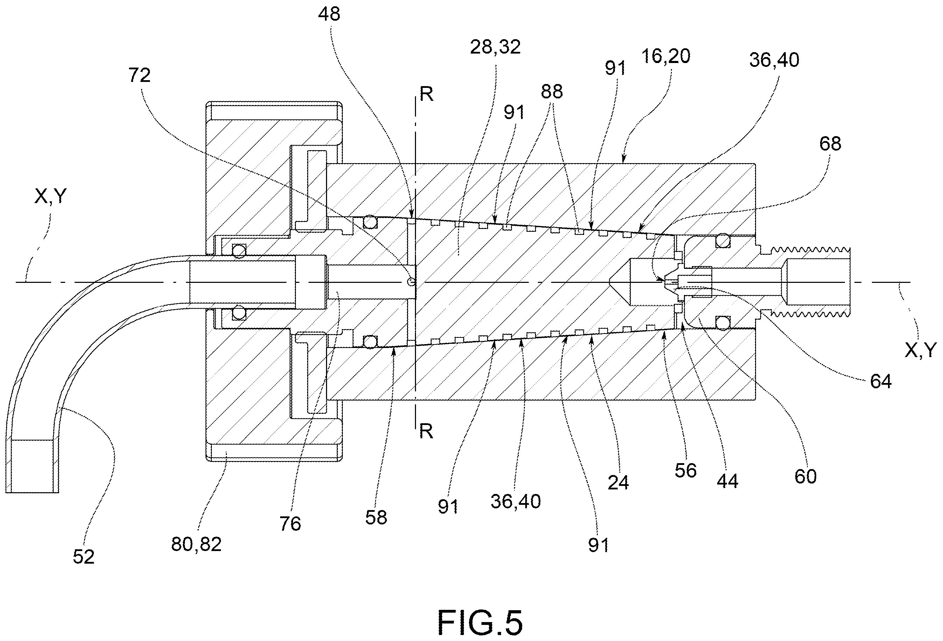

Fig. 5 is a sectional view of the assembly in Fig. 4, along the sectional plane IV-IV shown in Fig. 4;

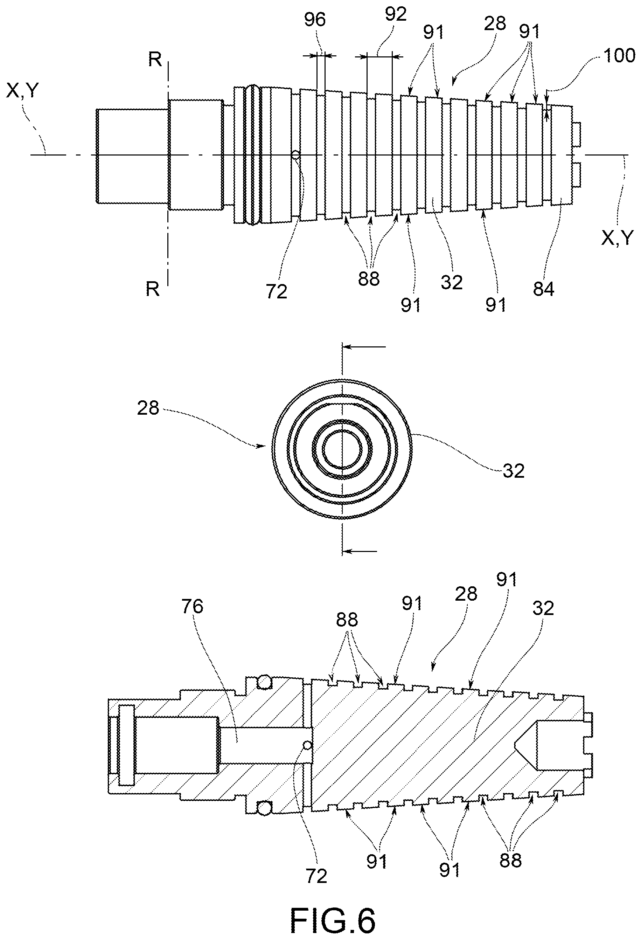

Fig. 6 depicts various views of an extruder of the whipping device according to a possible embodiment of the present invention;

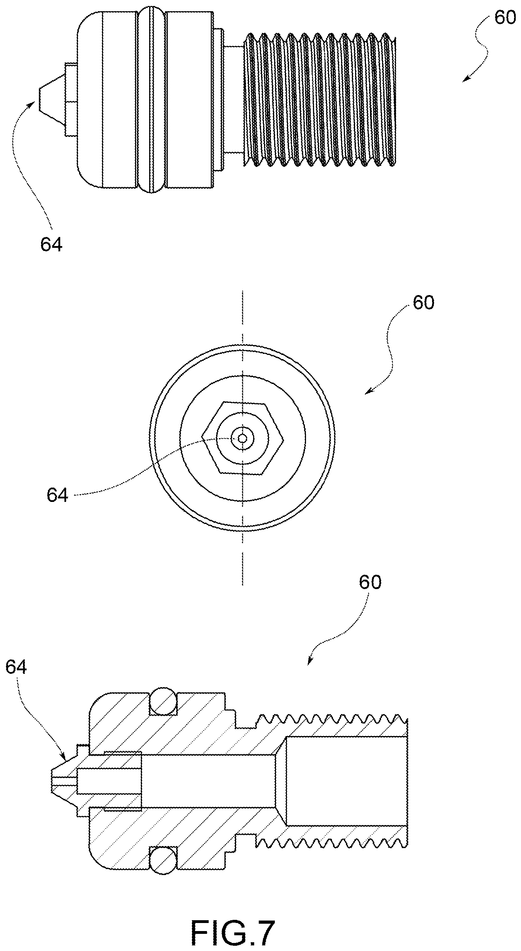

Fig. 7 depicts various views of an injector of the whipping device according to a possible embodiment of the present invention;

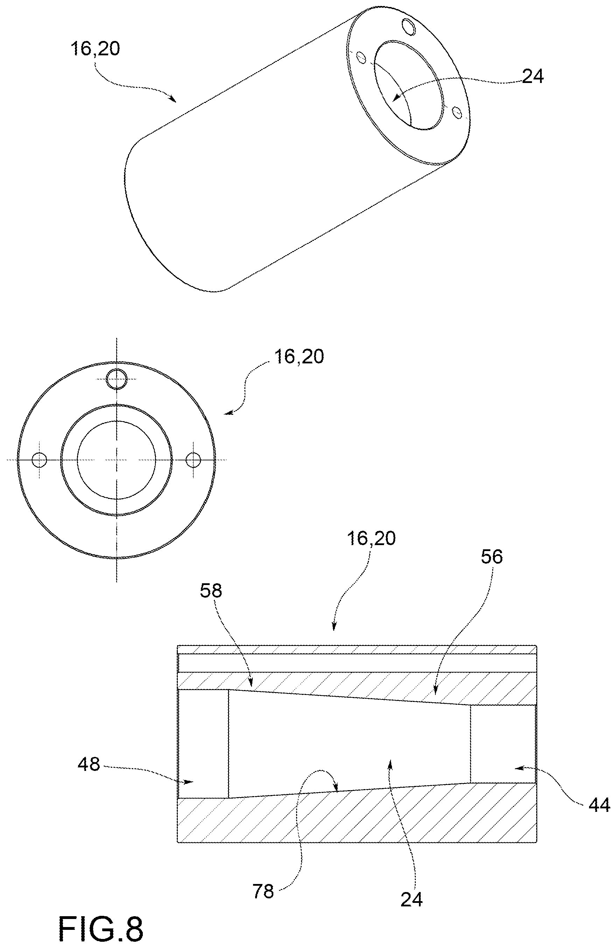

Fig. 8 depicts various views of a cylinder of the whipping device according to a possible embodiment of the present invention.

Elements or parts of elements common to the embodiments described hereinafter will be indicated with the same numerical references.

### DETAILED DESCRIPTION

With reference to the aforesaid figures, an overall view of a device for whipping a food liquid has been indicated globally with 4.

For the purposes of the present invention, the food liquid may be of any type and chemical composition; preferably, but not exclusively, a milk is used as the food liquid.

The device 4 comprises a pump 8 for sending a food liquid to be whipped under pressure.

The pump 8 may be of any type, power, and size; preferably the pump draws in the food liquid from a tank 12 and, for example, pre-mixes the drawn-in liquid with a jet of air.

It should be noted that the pump 8 may be of the fixed type, which ensures a predetermined delivery pressure, or adjustable, so that both the maximum delivery pressure value and the law by which this value is reached may be varied. For example, it is possible, depending on the type of food liquid and/or the temperature thereof, to use a nonlinear and/or stepped pressure law.

The device 4 comprises a device body 16 provided with at least one cylinder 20 delimiting a cavity 24, extending along a main direction X-X, and an extruder 28, housed within the cavity 24 of the cylinder 20. The cavity 24 is preferably a cylindrical cavity with a circular cross-section. It should be noted that the cylinder 20 is a container body in a broad sense that does not necessarily have a circular geometry. Therefore, the cylinder 20 may have any type of geometry, for example cylindrical, square, rectangular, polygonal, irregular, and the like.

The cylinder 20, on its outer wall opposite said cavity 24, may comprise temperature control means (not shown). These temperature control means may both refrigerate and heat the food liquid passing through the cavity 24. For example, said temperature control means comprise electrical resistors and/or a heat exchanger.

The extruder 28 has a full extruder body 32, counter-shaped to the cavity 24 and housed with clearance 36 in said cavity 24.

Said clearance 36 identifies a peripheral passage chamber 40 for said food liquid extending from an inlet end 44 to an outlet or dispensing end 48 of the food liquid.

The peripheral passage chamber 40 for the food liquid has a toroidal shape with respect to an axis of symmetry Y-Y of the extruder 28 parallel to the main direction X-X.

The clearance 36 represents a radial height of the peripheral chamber 40, along a radial direction R-R perpendicular to and incident with said axis of symmetry Y-Y.

The inlet end 44 is in fluid connection with a delivery of said pump 8, while the outlet or dispensing end 48 is configured to dispense the whipped food liquid.

In this regard, the outlet end 48 is fluidly connected to a dispensing spout 52.

Preferably, the cavity 24 and the extruder body 32 have truncated conical geometry with respect to an axis of symmetry Y-Y parallel to said main direction X-X.

According to a possible embodiment, the cavity 24 and the extruder body 32 have a vertex conicity comprised between 3 and 12 degrees, preferably equal to about 7 degrees.

Preferably, the cavity 24 and the extruder body 32 have the same vertex conicity.

According to a possible embodiment, the conicity is oriented so as to arrange the converging side 56 facing the inlet end 44 of the food liquid, and the divergent side 58 facing the outlet or dispensing end 48. In other words, the vertex of the cone is on the side of the inlet end 44. In this way, the food liquid, moving from the inlet end 44 toward the outlet end along the main direction X-X, tends to move away from the axis of symmetry Y-Y along a radial direction R-R perpendicular to and incident with the axis of symmetry Y-Y.

The device 4, at the inlet end 44, includes an injector 60 that fluidly connects a delivery of the pump to said inlet end 44.

For example, said injector 60 has an axial delivery 64, arranged coaxially to the axis of symmetry Y-Y of the extruder 28.

For example, said axial delivery 64 faces a hollow seat 68 of the extruder body 32.

In this way, the pressurized food liquid coming from the axial delivery 64 impinges against the hollow seat 68 which faces it, and moves radially toward the cavity 24 so as to reach the peripheral chamber 40. This initial radial movement contributes to the pressurization of the food liquid, which encounters resistance before being fed into the peripheral chamber 40.

At the outlet end 48, the extruder body 32 comprises a plurality of radial holes 72 that connect the cavity 24 to a central delivery conduit 76 fluidly connected to said dispensing spout 52.

The central delivery conduit 76 is preferably coaxial to the axis of symmetry Y-Y of the extruder 28.

According to the present invention, the extruder body 32 is axially slidable with respect to the cavity 24, parallel to the main direction X-X, so as to vary the clearance 36 or radial height of said peripheral passage chamber 40 of the food liquid, measured perpendicular to an axis of symmetry Y-Y of the extruder 28.

In fact, axially displacing the extruder body 32 along the main direction X-X with respect to the cavity 24 significantly changes said clearance 36 which is minimal (virtually zero) if the extruder body 32 is placed against an inner side wall 78 of the cavity 24 and increases as the extruder body 32 is moved away from the cavity 24.

The relative position between the extruder body 32 and the cavity 24 may be locked by spacers and/or similar locking means (not shown). Advantageously, during the stages of whipping the food liquid, the extruder body 32 is fixed with respect to the cavity 24, without prejudice to the possibility of modifying said clearance 36 through calibration means 80 better described below. Preferably, but not necessarily, the calibration is carried out before the stage of whipping the food liquid.

According to a possible embodiment, the extruder body 32 is provided with calibration means 80 configured to allow the translation thereof relative to the cavity 24, parallel to the main direction X-X.

For example, said calibration means 80 comprise a screw/nut-screw-type mechanism. For example, the device will be provided with an adjustment ferule or knob 82, mechanically connected to the screw/nut-screw mechanism and accessible from outside the device body. Typically, but not exclusively, said adjustment ferrule or knob 82 is placed at the front of the device, near the dispensing spout 52, so that it is easily accessible to the user. It is also possible to arrange electric motors that perform this adjustment once actuated by the user.

According to a possible embodiment, the extruder body 32, at one of its outer side walls 84, directly facing the cavity 24 of the cylinder 20, has a plurality of circumferential grooves 88.

The circumferential grooves 88 actually increase the clearance 36 locally so that there is a sudden reduction in the pressure of the food liquid flowing therethrough. This reduction in pressure results in the expansion of the liquid and its incorporation of air: in this way, the degree of whipping of the food liquid is increased.

For example, said circumferential grooves 88 are spaced from each other by an axial pitch 92, wherein the ratio between an axial width 96 and the axial pitch 92 of the circumferential grooves is comprised between 1.7 and 2.0. These dimensions contribute to the achievement of an effective whipping of the food liquid.

Preferably, said circumferential grooves 88 extend perpendicular to the main direction X-X.

For example, the ratio between a radial depth 100 and an axial width 96 of said circumferential grooves 88 is comprised between 0.5 and 1. These dimensions contribute to the achievement of an effective whipping of the food liquid.

According to a possible embodiment, the extruder body 32, on the outer side wall 84, at ridges 91 comprised between adjacent circumferential grooves 88, has a knurling surface treatment.

For example, said knurled portion has a radial height of about 0.1-2 mm.

According to a possible embodiment, said knurled portion has incisions according to mutually perpendicular straight lines forming an angle of 45 degrees with said main direction X-X.

Advantageously, said knurling amplifies the technical effect of whipping the food liquid since it creates micro-paths or twists and turns that the food liquid follows while passing through said peripheral chamber 40.

The operation of the device according to the present invention will now be described.

In particular, the pump 8 of the device 4 is first activated in order to pressurize the food liquid.

As shown, the pump 8 may deliver the liquid at a specific delivery pressure, or specific pressure curves, linear and nonlinear, may be used, depending on the type and temperature of the food liquid being treated.

The pressurized food liquid coming from the axial delivery 64 of the pump 8 impinges against the hollow seat 68 which faces it, and moves radially toward the cavity 24 so as to reach the peripheral chamber 40. This initial radial movement contributes to the pressurization of the food liquid, which encounters resistance before being fed into the peripheral chamber 40.

Once the liquid enters the peripheral chamber, it travels through the chamber, increasing in pressure overall. When the liquid meets the circumferential grooves 88, there is in fact a local increase in clearance 36 so that the pressure of the food liquid is suddenly reduced. This reduction in pressure results in the expansion of the liquid and its incorporation of air: in this way, the degree of whipping of the food liquid is increased. Thereafter, the food liquid continues its compression until it encounters a subsequent circumferential groove 88.

Finally, at the outlet end 48, the liquid is channeled into the radial holes 72 in the extruder body 32, which connect the cavity 24 to the central delivery conduit 76 fluidly connected to said delivery spout 52.

During or before operation, the user may change the relative axial position between the extruder body 32 and the cavity 24 so as to modify the width of the clearance 36 and thus the degree of compression and consequently of whipping that the device 4 may apply to the food liquid. In any case, during whipping, the extruder body 32 is fixed relative to the cavity 24, with the exception of any calibrations made, as seen, by the user, to modify said clearance 36.

Moreover, this variation of the relative axial position between the extruder body 32 and the cavity 24 may be made depending not only on the food liquid, and thus its chemical composition, but also on the temperature of said liquid. Therefore, as the temperature of the food liquid decreases, it will be appropriate to increase the width of the clearance 36, that is, of the peripheral chamber 40, and vice versa.

To make this adjustment, the user may act on the calibration means 80, for example by turning the adjustment ferule or knob 82, or the user may act on an electric control, if provided.

As may be appreciated from that which has been described, the present invention overcomes the drawbacks of the prior art.

In particular, the present invention enables the effective whipping of most food liquids in a consistent and repeatable manner, making it thus suitable for industrial applications.

The device may be easily adapted to milks of different composition, temperature, and with different delivery pressures. In particular, skim milk may also be whipped without any problem.

Advantageously, by adjusting the axial position of the extruder with respect to the cylinder, the passage channel of the food liquid may be changed with extreme precision and repeatability, and therefore the succession of compression and expansion phases of the food liquid may be finely adjusted. This adjustment may be changed according to the chemical composition of the food liquid (e.g., milk of animal or vegetable origin, or whole, low-fat, or skim milk), its delivery pressure inside the cylinder, and/or its temperature.

Such precise modification of the passage channel allows the degree of whipping of the food liquid to be changed at will.

The modification is immediate and requires no disassembly and/or maintenance: in effect, it is sufficient to turn the adjustment knob or ferule operatively connected to the extruder, which may partially translate with respect to the cylinder. Moreover, the adjustment may be carried out both during the operation of the whipping device, for example, to check in real time the effects brought by the adjustment on the dispensed liquid, and at rest.

Advantageously, unlike the known steam devices, the device according to the present invention is not noisy and does not involve splashing of any kind.

The maintenance of the device according to the present invention is particularly quick and easy, since it is sufficient to disassemble the extruder and clean the inside of the cylinder.

The present invention, unlike devices of the prior art, allows even a completely fat-free food liquid, such as skim milk, to be whipped effectively.

The whipping device is also particularly economical to make, since, due to the conical geometry of the extruder, it does not require particularly strict machining tolerances.

Advantageously, the device of the present invention allows for the whipping of a food liquid due to the ability to aggregate and thus elongate the proteins through the successive steps of compressing and expanding the liquid within the cylinder. Furthermore, the precise and calibrated succession of compression and expansion phases, which occur due to the grooves obtained in the side surface of the extruder, allows for the effective incorporation of air inside the food liquid, which is thus whipped effectively and durably, even as it exits the cylinder.

Thus, due to the present invention, it is possible to whip any type of food liquid, using a single type of extruder, by simply varying the relative position between the extruder and the cylinder, in such a way that the width of the channel for the passage of the food liquid may be changed at will.

Adjustments of the axial position of the extruder relative to the cylinder may advantageously be recorded, so that the whipping operation is repeatable, given the same boundary conditions. This function is very useful in the case of professional use, such as in a bar or cafe.

A person skilled in the art, for the purpose of satisfying contingent and specific needs, may make numerous modifications and variations to the solutions described above, within the scope of the invention, as defined by the appended claims.

The scope of protection of the invention is defined by the following claims.

## Claims

1. A device (4) for whipping a food liquid, comprising:
- a pump (8) for sending a pressurized food liquid to be whipped,
- a device body (16) provided with at least one cylinder (20) delimiting a cavity (24), extending along a main direction (X-X),
- an extruder (28), housed inside the cavity (24) of the cylinder (20), having a full extruder body (32) which is counter-shaped with respect to the cavity (24) and housed with clearance (36) in said cavity (24), said clearance (36) identifying a peripheral passage chamber (40) for said food liquid extending from an inlet end (44) to an outlet or dispensing end (48) of the food liquid, the inlet end (44) being in fluid connection with a delivery (64) of said pump (8), the outlet or dispensing end (48) being configured to dispense the whipped food liquid,
- wherein the cavity (24) and the extruder body (32) have a truncated conical geometry with respect to an axis of symmetry (Y-Y) parallel to said main direction (X-X),
- said extruder (29) being fixed with respect to the cavity (24) during the whipping of the food liquid, the device for whipping a food liquid being **characterised in that** the extruder body (32) is axially slidable with respect to the cavity (24), parallel to the main direction (X-X), so as to vary a radial height of said peripheral passage chamber (40) of the food liquid, measured along a radial direction (R-R) perpendicular to and incident with an axis of symmetry (Y-Y) of the extruder (28).

2. The device (4) according to claim 1, wherein the cavity (24) and the extruder body (32) have a vertex conicity comprised between 3 and 12 degrees.

3. The device (4) according to claim 1 or 2, wherein the cavity (24) and the extruder body (32) have the same conicity.

4. The device (4) according to claim 1, 2 or 3, wherein the conicity is oriented so as to arrange the converging side (56) facing the inlet end (44) of the food liquid and the diverging side (58) facing the outlet or dispensing end (48).

5. The device (4) according to any one of claims 1 to 4, wherein at the inlet end (44), an injector (60) is included which fluidly connects an axial delivery (64) of the pump (8) to said inlet end (44). wherein said axial delivery (64) is arranged coaxially to an axis of symmetry (Y-Y) of the extruder (28), and wherein said axial delivery (64) faces a hollow seat (68) of the extruder body (32).

6. The device (4) according to any one of claims 1 to 5, wherein at the outlet end (48), the extruder body (32) comprises a plurality of radial holes (72) connecting the cavity (24) to a central delivery conduit (76) fluidly connected to a dispensing spout (52). wherein said central delivery conduit (76) is coaxial to an axis of symmetry (Y-Y) of the extruder (28).

7. The device (4) according to any one of claims 1 to 6, wherein the extruder body (32) is provided with calibration means (80) configured to allow the translation thereof with respect to the cavity (24), parallel to the main direction (X-X).

8. The device (4) according to claim 7, wherein said calibration means (80) comprise a screw/nut-screw-type mechanism.

9. The device (4) according to any one of claims 1 to 8, wherein the extruder body (32), at an outer side wall (84) thereof, directly facing the cavity (24) of the cylinder (20), has a plurality of circumferential grooves (88).

10. The device (4) according to claim 9, wherein said circumferential grooves (88) are spaced from each other by an axial pitch (92), wherein the ratio between an axial width (96) and the axial pitch (92) of the circumferential grooves (88) is comprised between 1.7 and 2.0.

11. The device (4) according to claim 9 or 10, wherein said circumferential grooves (88) extend perpendicular to the main direction (X-X).

12. The device (4) according to claim 9, 10 or 11, wherein the ratio between a radial depth (100) and an axial width (96) of said circumferential grooves (88) is comprised between 0.5 and 1.

13. The device (4) according to any one of claims 1 to 12, wherein the extruder body (32), on the outer side wall (84), at ridges (91) comprised between adjacent circumferential grooves (88), has a knurling surface treatment.

14. The device (4) according to claim 13, wherein said knurled portion has a radial height of about 0.1-2 mm.

15. The device (4) according to any one of claims 1 to 14, wherein the cylinder (20), on an outer wall thereof opposite said cavity (24), comprises temperature control means configured to cool and/or heat the food liquid passing through the peripheral chamber (40) of the cavity (24), wherein said temperature control means comprise electrical resistors and/or a heat exchanger.

## Patentansprüche

1. Vorrichtung (4) zum Aufschlagen einer Lebensmittelflüssigkeit, umfassend:
- eine Pumpe (8) zum Fördern einer unter Druck stehenden Lebensmittelflüssigkeit, die aufgeschlagen werden soll,
- einen Vorrichtungskörper (16), der mit mindestens einem Zylinder (20) versehen ist, der einen Hohlraum (24) begrenzt, der sich entlang einer Hauptrichtung (X-X) erstreckt,
- einen Extruder (28), der innerhalb des Hohlraums (24) des Zylinders (20) aufgenommen wird und einen Voll-Extruderkörper (32) aufweist, der entgegengesetzt in Bezug auf den Hohlraum (24) geformt wird und mit einem Spiel (36) in dem Hohlraum (24) aufgenommen wird, wobei das Spiel (36) eine periphere Durchgangskammer (40) für die Lebensmittelflüssigkeit identifiziert, die sich von einem Einlassende (44) zu einem Auslass- oder Ausgabende (48) der Lebensmittelflüssigkeit erstreckt, wobei das Einlassende (44) in Fluidverbindung mit einer Versorgung (64) der Pumpe (8) steht, das Auslass- oder Ausgabende (48) dazu konfiguriert ist, die aufgeschlagene Lebensmittelflüssigkeit auszugeben,
- wobei der Hohlraum (24) und der Extruderkörper (32) eine kegelförmige abgestumpfte Geometrie in Bezug auf eine Symmetrieachse (Y-Y) aufweisen, die sich parallel zu der Hauptrichtung (X-X) erstreckt,
- der Extruder (28) während des Aufschlagens der Lebensmittelflüssigkeit in Bezug auf den Hohlraum (24) feststehend ist,
wobei die Vorrichtung zum Aufschlagen einer Lebensmittelflüssigkeit **dadurch gekennzeichnet ist, dass**
der Extruderkörper (32) in Bezug auf den Hohlraum (24) axial verschiebbar ist, parallel zu der Hauptrichtung (X-X), um eine radiale Höhe der peripheren Durchgangskammer (40) der Lebensmittelflüssigkeit zu ändern, wobei die radiale Höhe entlang einer radialen Richtung (R-R) gemessen wird, die sich senkrecht zu einer Symmetrieachse (Y-Y) des Extruders (28) erstreckt und sich mit dieser schneidet.

2. Vorrichtung (4) nach Anspruch 1, wobei der Hohlraum (24) und der Extruderkörper (32) eine Konizität des Scheitels zwischen 3 und 12 Grad aufweisen.

3. Vorrichtung (4) nach Anspruch 1 oder 2, wobei der Hohlraum (24) und der Extruderkörper (32) dieselbe Konizität aufweisen.

4. Vorrichtung (4) nach Anspruch 1, 2 oder 3, wobei die Konizität ausgerichtet ist, um die konvergente Seite (56) anzuordnen, sodass sie dem Einlassende (44) der Lebensmittelflüssigkeit zugewandt ist und die divergente Seite (58) anzuordnen, sodass sie dem Auslass- oder Ausgabende (48) zugewandt ist.

5. Vorrichtung (4) nach einem der Ansprüche 1 bis 4, wobei an dem Einlassende (44) ein Injektor (60) vorgesehen ist, der eine axiale Versorgung (64) der Pumpe (8) in Fluidverbindung mit dem Einlassende (44) setzt, wobei die axiale Versorgung (64) koaxial zu der Symmetrieachse (Y-Y) des Extruders (28) angeordnet ist, und wobei die axiale Versorgung (64) einem hohlen Sitz (68) des Extruderkörpers (32) zugewandt ist.

6. Vorrichtung (4) nach einem der Ansprüche 1 bis 5, wobei an dem Auslassende (48) der Extruderkörper (32) eine Mehrzahl Radialbohrungen (72) aufweist, die den Hohlraum (24) mit einer Zentralversorgungsleitung (76) verbinden, die in Fluidverbindung mit einem Versorgungsmundstück (52) steht, wobei die Zentralversorgungsleitung (76) koaxial zu der Symmetrieachse (Y-Y) des Extruders (28) ist.

7. Vorrichtung (4) nach einem der Ansprüche 1 bis 6, wobei der Extruderkörper (32) mit Kalibrierungsmitteln (80) versehen ist, die dazu konfiguriert sind, dessen Verschiebung in Bezug auf den Hohlraum (24) parallel zu der Hauptrichtung (X-X) zu ermöglichen.

8. Vorrichtung (4) nach Anspruch 7, wobei die Kalibrierungsmittel (80) einen Schraube/Mutter-Schraube-Mechanismus umfassen.

9. Vorrichtung (4) nach einem der Ansprüche 1 bis 8, wobei der Extruderkörper (32) an einer äußeren Seitenwand (84) davon, die dem Hohlraum (24) des Zylinders (20) direkt zugewandt ist, eine Mehrzahl umlaufender Nuten (88) aufweist.

10. Vorrichtung (4) nach Anspruch 9, wobei die umlaufenden Nuten (88) durch einen axialen Abstand (92) voneinander beabstandet sind, wobei das Verhältnis zwischen einer axialen Breite (96) und dem axialen Abstand (92) der umlaufenden Nuten (88) zwischen 1,7 und 2,0 liegt.

11. Vorrichtung (4) nach Anspruch 9 oder 10, wobei sich die umlaufenden Nuten (88) senkrecht zu der Hauptrichtung (X-X) erstrecken.

12. Vorrichtung (4) nach Anspruch 9, 10 oder 11, wobei das Verhältnis zwischen einer radialen Tiefe (100) und einer axialen Breite (96) der umlaufenden Nuten (88) zwischen 0,5 und 1 liegt.

13. Vorrichtung (4) nach einem der Ansprüche 1 bis 12, wobei der Extruderkörper (32) an der äußeren Seitenwand (84), an Spitzen (91), die zwischen angrenzenden umlaufenden Nuten (88) enthalten sind, eine Rändeloberflächenbehandlung aufweist.

14. Vorrichtung (4) nach Anspruch 13, wobei der gerändelte Abschnitt eine radiale Höhe von etwa 0,1-2 mm aufweist.

15. Vorrichtung (4) nach einem der Ansprüche 1 bis 14, wobei der Zylinder (20), an einer äußeren Wänd davon, die der Hohlraum (24) gegenüberliegt, Temperatursteuermittel aufweist, die dazu konfiguriert sind, die Lebensmittelflüssigkeit, die durch die periphere Kammer (40) des Hohlraums (24) durchströmt, zu kühlen und/oder zu erhitzen, wobei die Temperatursteuermittel elektrische Widerstände und/oder einen Wärmetauscher umfassen.

## Revendications

1. Dispositif (4) pour fouetter un liquide alimentaire, comprenant :
- une pompe (8) destinée à envoyer un liquide alimentaire sous pression à fouetter,
- un corps de dispositif (16) pourvu d'au moins un cylindre (20) délimitant une cavité (24), s'étendant selon une direction principale (X-X),
- un extrudeur (28), logé à l'intérieur de la cavité (24) du cylindre (20), ayant un corps d'extrudeur plein (32) qui est contre-formé par rapport à la cavité (24) et logé avec un jeu (36) dans ladite cavité (24), ledit jeu (36) définissant une chambre de passage périphérique (40) pour ledit liquide alimentaire s'étendant d'une extrémité d'entrée (44) à une extrémité de sortie ou de distribution (48) du liquide alimentaire, l'extrémité d'entrée (44) étant en connexion fluidique avec un refoulement (64) de ladite pompe (8), l'extrémité de sortie ou de distribution (48) étant configurée pour distribuer le liquide alimentaire fouetté,
- dans lequel la cavité (24) et le corps d'extrudeur (32) présentent une géométrie tronconique par rapport à un axe de symétrie (Y-Y) parallèle à ladite direction principale (X-X),
- ledit extrudeur (28) étant fixe par rapport à la cavité (24) durant le fouettement du liquide alimentaire,
le dispositif pour fouetter un liquide alimentaire étant **caractérisé en ce que**
le corps d'extrudeur (32) est coulissant axialement par rapport à la cavité (24), parallèlement à la direction principale (X-X), de manière à faire varier une hauteur radiale de ladite chambre de passage périphérique (40) du liquide alimentaire, mesurée selon une direction radiale (R-R) perpendiculaire et incidente à un axe de symétrie (Y-Y) de l'extrudeur (28).

2. Dispositif (4) selon la revendication 1, dans lequel la cavité (24) et le corps d'extrudeur (32) présentent une conicité au sommet comprise entre 3 et 12 degrés.

3. Dispositif (4) selon la revendication 1 ou 2, dans lequel la cavité (24) et le corps d'extrudeur (32) présentent la même conicité.

4. Dispositif (4) selon la revendication 1, 2 ou 3, dans lequel la conicité est orientée de manière à disposer le côté convergent (56) face à l'extrémité d'entrée (44) du liquide alimentaire et le côté divergent (58) face à l'extrémité de sortie ou de distribution (48).

5. Dispositif (4) selon l'une quelconque des revendications 1 à 4, dans lequel à l'extrémité d'entrée (44), un injecteur (60) est prévu, qui connecte fluidiquement un refoulement axial (64) de la pompe (8) à ladite extrémité d'entrée (44), dans lequel ledit refoulement axial (64) est disposé coaxialement à un axe de symétrie (Y-Y) de l'extrudeur (28), et dans lequel ledit refoulement axial (64) est orienté vers un logement creux (68) du corps d'extrudeur (32).

6. Dispositif (4) selon l'une quelconque des revendications 1 à 5, dans lequel à l'extrémité de sortie (48), le corps d'extrudeur (32) comprend une pluralité de trous radiaux (72) reliant la cavité (24) à un conduit central de distribution (76) connecté fluidiquement à un bec de distribution (52), dans lequel ledit conduit central de distribution (76) est coaxial à un axe de symétrie (Y-Y) de l'extrudeur (28).

7. Dispositif (4) selon l'une quelconque des revendications 1 à 6, dans lequel le corps d'extrudeur (32) est pourvu de moyens de calibration (80) configurés pour permettre la translation de celui-ci par rapport à la cavité (24), parallèlement à la direction principale (X-X).

8. Dispositif (4) selon la revendication 7, dans lequel lesdits moyens de calibration (80) comprennent un mécanisme de type vis/écrou.

9. Dispositif (4) selon l'une quelconque des revendications 1 à 8, dans lequel le corps d'extrudeur (32), sur une paroi latérale extérieure (84) de celui-ci, faisant directement face à la cavité (24) du cylindre (20), présente une pluralité de rainures circonférentielles (88).

10. Dispositif (4) selon la revendication 9, dans lequel lesdites rainures circonférentielles (88) sont espacées les unes des autres par un pas axial (92), dans lequel le rapport entre une largeur axiale (96) et le pas axial (92) des rainures circonférentielles (88) est compris entre 1,7 et 2,0.

11. Dispositif (4) selon la revendication 9 ou 10, dans lequel lesdites rainures circonférentielles (88) s'étendent perpendiculairement à la direction principale (X-X).

12. Dispositif (4) selon la revendication 9, 10 ou 11, dans lequel le rapport entre une profondeur radiale (100) et une largeur axiale (96) desdites rainures circonférentielles (88) est compris entre 0,5 et 1.

13. Dispositif (4) selon l'une quelconque des revendications 1 à 12, dans lequel le corps d'extrudeur (32), sur la paroi latérale extérieure (84), au niveau des arêtes (91) comprises entre les rainures circonférentielles adjacentes (88), présente un traitement de surface moleté.

14. Dispositif (4) selon la revendication 13, dans lequel ladite portion moletée présente une hauteur radiale d'environ 0,1 à 2 mm.

15. Dispositif (4) selon l'une quelconque des revendications 1 à 14, dans lequel le cylindre (20), sur une paroi extérieure de celui-ci opposée à ladite cavité (24), comprend des moyens de contrôle de température configurés pour refroidir et/ou chauffer le liquide alimentaire passant à travers la chambre périphérique (40) de la cavité (24), dans lequel lesdits moyens de contrôle de température comprennent des résistances électriques et/ou un échangeur thermique.
